# NEUE EUROPÄISCHE PATENTSCHRIFT

(11) **EP 0 318 566 B2**
(45) Veröffentlichungstag und Bekanntmachung des Hinweises auf die Entscheidung über den Einspruch: **25.05.1994**
(45) Hinweis auf die Patenterteilung: 16.10.1991
(21) Anmeldenummer: 88905756.8
(22) Anmeldetag: 14.06.1988
(51) Int. Cl.: G01B 11/02, G11B 7/12

(54) **OPTISCHER ABTASTKOPF**
OPTICAL SCANNING HEAD
TETE DE BALAYAGE OPTIQUE

(30) Priorität: 16.06.1987 DE 3720079
(43) Veröffentlichungstag der Anmeldung: 07.06.1989
(73) Patentinhaber: Focus Messtechnik GmbH & CO. KG, D-76275 Ettlingen (DE)
(72) Erfinder: Breitmeier, Ulrich, D-7000 Stuttgart 80 (DE)
(74) Vertreter: Ostertag, Ulrich
(86) Internationale Anmeldenummer: EP8800527
(87) Internationale Veröffentlichungsnummer: WO8810405

(56) Entgegenhaltungen:
- EP-A- 0 131 710
- WO-A-85/05673
- WO-A-86/07444
- AU-B- 5 648 969
- DE-A- 3 536 700
- DE-A- 3 610 530
- DE-A- 3 641 048
- DE-C- 3 219 503
- US-A- 4 650 335
- US-A- 4 657 357
- Patent Abstracts of Japan, vol. 10, No. 162 (P-466) (2218), 10 June 1986 & JP, A, 6117005
- Patent Abstracts of Japan, vol. 8, No. 55 (P-260) (1492), 13 March 1984 & JP, A, 58204305
- Patent Abstracts of Japan, vol. 8, No. 237 (P-310) (1674), 30 October 1984 & JP, A, 59113521
- Proceedings of SPIE - The International Society for Optical Engineering, 8-9 June 1983, Arlington, Virginia (US), vol. 421, SPIE (US), E.V. LaBudde: "Optical disks systems and applications", H. Inada et al.: "Tracking servo system with new optical head locked objective lens", pages 136-142
- Measurement of Surface Topography of Magnetic Tapes by Mirau Interferometry, Applied Optics, Vol. 24, No. 10, 15th May 1985, pp.1489-1497
- Zeitschrift "Microscopia Acta", Vol. 81, No. 1, pp. 31-44 (1978)

## Beschreibung

Die Erfindung betrifft einen optischen Abtastkopf gemäß dem Oberbegriff des Anspruches 1.

Derartige optische Abtastköpfe sind zum Einbau in CD-Abspielgeräte bestimmt und dienen zum Auslesen der auf der CD (compact disk) abgespeicherten optischen Information. Dadurch, daß man die Meßlichtquelle nicht auf der Objektivachse, vielmehr auf einer hierzu unter rechtem Winkel stehenden Achse anordnet und das Meßlicht über einen Umlenkspiegel von der Meßlichtquelle über das Objektiv auf die abzutastende Fläche abbildet, erhält man besonders niedere Bauhöhe des Abtastkopfes, was ermöglicht, CD-Abspielgeräte mit so geringer Bauhöhe zu realisieren, daß sie den Standardmaßen von Autoradios entsprechen.

Diese Bauart des Abtastkopfes hat als für den Einsatz bei Kraftfahrzeug-CD-Abspielgeraten nicht relevanten weiteren Vorteil, daß der Strahlengang zwischen Meßlichtquelle und Objektiv für Manipulationen zugänglich wird, da der Umlenkspiegel in eine Öffnung des Gehäuses des Abtastkopfes eingesetzt ist.

Es wurde schon vorgeschlagen (DE-OS 35 36 700), derartige Abtastköpfe von CD-Abspielgeräten auch zur hochauflösenden Ausmessung der Profilierung und der Oberflächenrauheit von Werkstückoberflächen zu verwenden. Hierbei wäre es zuweilen vorteilhaft, wenn man den gerade ausgemessenen Oberflächenabschnitt auch visuell kontrollieren könnte.

Es wurde nun erkannt, daß man durch geringfügige Abänderung des Umlenkspiegels an einem optischen Abtastkopf, wie er in Kraftfahrzeug-CD-Abspielgeräten verwendet wird und im Oberbegriff des Anspruches 1 angegeben ist, zu sehr geringen Kosten die zusätzliche Möglichkeit einer direkten Beobachtung der gerade ausgemessenen Stelle der Werkstückoberfläche schaffen kann.

Hierzu wird erfindungsgemäß vorgeschlagen, einen Umlenkspiegel zu verwenden, der zwar für das Meßlicht undurchlässig ist, jedoch für mindestens eine Wellenlänge im sichtbaren Bereich des Spektrums durchlässig ist und nicht nur auf der spiegelnden Vorderseite, sondern auch auf seiner Rückseite optische Qualität aufweist Man kann dann hinter diesen Umlenkspiegel direkt eine Beobachtungseinrichtung stellen. Da oft der Umlenkspiegel schon von Hause aus ein dielektrischer Spiegel ist, also einen für sichtbares Licht durchlässigen Grundkörper (in der Regel aus Glas) aufweist, reicht es in vielen Fällen aus, den schon am für CD-Abtastgeräte bestimmten Abtastkopf befindlichen, leicht zugänglichen Umlenkspiegel abzunehmen, noch zusätzlich auf seiner Rückseite auf optische Qualität zu polieren und dann wieder einzubauen. Die Beobachtungsoptik kann ein handelsübliches Mikroskop-Okular sein.

Die erfindungsgemäße Modifizierung des optischen Abtastkopfes erlaubt somit zu sehr geringen Zusatzkosten eine visuelle Betrachtung der jeweils ausgemessenen Stelle der Werkstückoberfläche. Die zusätzlich vorgesehenen optischen Teile brauchen nicht speziell angefertigt zu werden, sie benötigen auch nicht viel Platz und erhöhen das Gewicht des Abtastkopfes nicht stark.

Da die in CD-Abtastköpfen verwendeten Objektive sehr kurze Brennweite haben (in der Praxis 4,5 mm) und auch geringen Durchmesser (in der Praxis 6-8 mm) aufweisen, entsprechen diese Objektive in sehr guter Näherung Mikroskop-Objektiven. Zusammen mit einem handelsüblichen Mikroskop-Okular erhält man somit erfindungsgemäß ein in den Abtastkopf integriertes Mikroskop.

Vorteilhafte Weiterbildungen der Erfindung sind in Unteransprüchen angegeben.

Mit der Weiterbildung der Erfindung gemäß Anspruch 2 ist eine visuelle Kontrolle der Meßstelle auch dann einfach möglich, wenn das Umgebungslicht sehr schwach ist und/oder durch den Abtastkopf abgeschattet wird. Abtastkopf und Beleuchtungseinrichtung enthaltende Beobachtungseinrichtung bilden eine kompakte, glattflächige Einheit. Außerdem fällt das Beobachtungslicht exakt auf die Meßstelle auf, sodaß die Beleuchtungseinrichtung nur geringe Leistung zu haben braucht.

Die Weiterbildung der Erfindung gemäß Anspruch 3 ist im Hinblick auf nur geringe Bauhöhe auch des modifizierten Abtastkopfes von Vorteil.

Mit der Weiterbildung der Erfindung gemäß Anspruch 4 wird erreicht, daß man die visuelle Beobachtung einer Stelle der Werkstückoberfläche und das Ausmessen dieser Stelle gleichzeitig vornehmen kann, ohne daß das Meßergebnis verfälscht wird, und zwar auch dann, wenn die fotoelektrische Wandleranordnung an sich für sichtbares Licht empfindlich ist, wie meistens der Fall.

Oft müssen Werkstückoberflächen auch an nicht gut zugänglichen Stellen ausgemessen werden, und hier ermöglicht die Weiterbildung der Erfindung gemäß Anspruch 6 die visuelle Kontrolle mit dem in den Abtastkopf integrierten Mikroskop in für die Bedienungsperson nicht-anstrengender Art und Weise. Sehr kompaktbauende Festkörper-Bildwandler mit recht guter Auflösung, sind als Vidikon-Ersatz in Femsehkameras zu verhältnismäßig geringen Preisen erhältlich. Sie können über die für diese Kameras entwickelte Elektronik einfach an einen Monitor angeschlossen werden.

Die Weiterbildung der Erfindung gemäß Anspruch 7 ist im Hinblick auf das einfache Aufrüsten solcher Abtastköpfe von Vorteil, die von Haus aus keine Möglichkeit zur Direkt-Beobachtung der Meßstelle bieten.

Auch die Weiterbildung der Erfindung gemäß Anspruch 8 ermöglicht ein bequemes Beobachten der Meßstelle aus Abstand.

Mit der Weiterbildung gemäß Anspruch 9 wird erreicht, daß die Beobachtungs-Lichtquelle räumlich vom Abtastkopf getrennt werden kann, was im Hinblick auf das Fernhalten von Wärme von Vorteil ist, ohne daß zum Hinführen des Beobachtungs-Lichtes zur Meßstelle zusätzliche apparative Vorkehrungen getroffen werden müssen.

Nachstehend wird die Erfindung anhand zweier Ausführungsbeispiele unter Bezugnahme auf die Zeichnung näher erläutert. In dieser zeigen:
Fig. 1: Einen schematischen vertikalen Schnitt durch einen optischen Abtastkopf zum hochauflösenden Ausmessen einer Werkstückoberfläche;
Fig. 2: Eine schematische Ansicht eines abgewandelten Okular-Einsatzes mit integriertem Bildwandler sowie eines hieran angeschlossenen Monitors, zur Verwendung mit dem Abtastkopf gemäß Fig. 1; und
Fig. 3: Eine ähnliche Schnittansicht wie Figur 1 durch einen abgewandelten Abtstkopf.

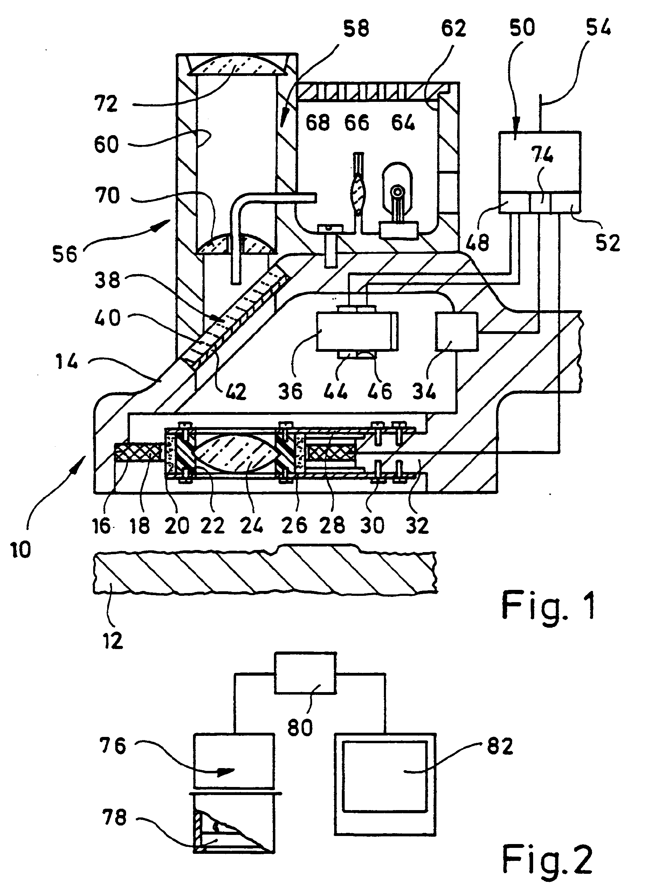

In Fig. 1 ist ein Abtastkopf insgesamt mit 10 bezeichnet, der zum hochgenauen Ausmessen von Oberflächenrauheiten und Oberflächenstrukturen auf der Oberfläche eines Werkstückes 12 dient.

Der Abtastkopf 10 hat ein Gehäuse 14, welches im wesentlichen becherförmig ist. In eine untere Öffnung 16 des Gehäuses 14 ist eine Ringspule 18 fest eingesetzt, welche ein axiales Magnetfeld erzeugt. Die Ringspule 18 arbeitet mit einem ringförmigen Permanentmagneten 20 zusammen, der auf die Außenseite eines Objektivringes 22 aufgeklebt ist. Der Objektivring 22 hält ein Objektiv 24. Die durch den Permanentmagneten 20, den Objektivring 22 und das Objektiv 24 gebildete Einheit durchsetzt unter radialem Spiel die Ringspule 18 und ist von zwei parallel zueinander verlaufenden Blattfedern 26, 28 getragen, deren in Fig. 1 links gelegener Abschnitt brillenförmig ausgebildet ist, so daß das Objektiv 24 frei bleibt, während der rechts gelegene Abschnitt streifenförmig ist und an seinem äußersten Ende durch Schrauben 30 an einem Steg 32 des Gehäuses 14 festgelegt ist. Die Blattfedern 26, 28 bilden so eine elastische Parallelogramm-Aufhängung für das Objektiv 24.

Im in Fig. 1 rechts gelegenen Abschnitt der Umfangswand des Gehäuses 14 ist ein im Roten arbeitender Halbleiter-Laser 34 befestigt. Der von diesem abgegebene Laserstrahl durchsetzt einen halbdurchlässigen Meßspiegel 36 und gelangt auf einen Umlenkspiegel 38. Dieser besteht aus einem Glas-Grundkörper 40 und einer auf dessen Unterseite aufgebrachten dielektrischen Schicht 42, die so gewählt ist, daß der Umlenkspiegel 38 den Laserstrahl reflektiert. Dieser durchquert dann das Objektiv 24 und wird von diesem auf die Oberfläche des Werkstückes 12 abgebildet.

Das von der Werkstückoberfläche reflektierte Laserlicht wird vom Objektiv 24 gesammelt und gelangt über den Umlenkspiegel 38 wieder zum Meßspiegel 36. Dieser spaltet einen Teil des reflektierten Meßlichtes ab und richtet es auf eine fotoelektrische Wandleranordnung 44, deren Mitte bei 46 angedeutet ist. Die fotoelektrische Wandleranordnung 44 erzeugt ein Ausgangssignal, das von der Lage des auftreffenden Lichtes bezüglich der Mittellinie 46 abhängt. Dieses Ausgangssignal gelangt auf einen Ein gangsverstärker 48 einer dem Abtastkopf 10 zugeordneten, insgesamt mit 50 bezeichneten Betriebsschaltung.

Die Betriebsschaltung 50 enthält nicht näher gezeigte Schaltkreise, welche die Abweichung des momentan erhaltenen Ausgangssignales der Wandleranordnung 44 von demjenigen Signal ermittelt, welches bei Auftreffen des Meßlichtes auf die Mittellinie 46 erhalten wird. Entsprechend der Differenz dieser beiden Signale erzeugt die Betriebsschaltung 50 ein Fehlersignal für einen Leistungsverstärker 52, welcher die Ringspule 18 speist. Der Speisestrom für die Ringspule 18 wird so lange erhöht oder erniedrigt, bis der Meßlichtfleck auf der Wandleranordnung 44 wieder auf der Mittellinie 46 liegt. Dies ist dann der Fall, wenn der Abstand zwischen Objektiv 24 und der ausgeleuchteten Stelle der Oberfläche des Werkstückes 12 exakt der Objektiv-Brennweite entspricht.

Aus der soweit gegebenen Beschreibung ist ersichtlich, daß das Objektiv 24 beim Bewegen des Abtastkopfes 10 über die Oberfläche des Werkstückes 12 so axial wandert, wie dies dem Oberflächenprofil des Werkstückes 12 entspricht. Durch einen mit dem Objektivring 22 zusammenarbeitenden Stellungsmesser oder durch Messen des zum Abgleich erforderlichen Speisestromes für die Ringspule 18 läßt sich somit ein sich mit dem Oberflächenprofil änderndes elektrisches Signal erzeugen. Für die Zwecke der vorliegenden Beschreibung sei angenommen, daß dieses Signal (gegebenenfalls nach Korrektur für Nichtlinearitäten im durch die Ringspule 18, den Permanentmagneten 20 und die Blattfedern 26, 28 gebildeten Antriebssystem) von der Größe des Ringspulen-Speisestromes abgeleitet ist Dieses Meßsignal wird auf einer Leitung 54 bereitgestellt.

Der soweit beschriebene Abtastkopf entspricht in seinem Aufbau Abtastköpfen, wie sie in CD-Abspielgeräten für Kraftfahrzeuge Verwendung finden.

Bei dem in Fig. 1 gezeigten Abtastkopf ist aber zusätzlich noch eine Einrichtung zur visuellen Betrachtung der ausgemessenen Stelle der Werkstückoberfläche vorgesehen. Hierzu ist die Rückseite des Glas-Grundkörpers 40 auf optische Qualität poliert. Dies kann einfach dadurch erfolgen, daß man den beim handelsüblichen CD-Abtastkopf vorhandenen Umlenkspiegel aus dem Gehäuse 14 herausnimmt und auf seiner Rückseite noch auf optische Qualität poliert, wonach der Umlenkspiegel 38 dann wieder ins Gehäuse 14 eingesetzt wird.

Die insgesamt durch 56 bezeichnete Beobachtungseinrichtung hat ein Gehäuse 58, welches einen Tubus 60 und eine Lampenkammer 62 vorgibt. In der Lampenkammer 62 ist eine Halogenlampe 64 angeordnet, deren Wendel über eine Linse 66 auf das Ende eines abgewinkelten Lichtleiters 68 abgebildet wird. Dieser durchsetzt den Tubus 60 und liegt mit seinem vertikal nach unten verlaufenden Lichtleiterabschnitt auf der Achse des Objektives, damit auch auf der Achse des Tubus 60.

In den Tubus 60 ist eine Tubuslinse 70 eingesetzt, die eine Kunststofflinse sein kann. Um eine möglichst geringe Bauhöhe der Gesamtordnung zu erhalten, kann man die Tubuslinse 70 in der Mitte durchbohren und das untere Ende des Lichtleiters 68 hindurchführen, wie in der Zeichnung wiedergegeben. In das obere Ende des Tubus 60 ist eine Okularlinse 72 eingesetzt.

Das von der Halogenlampe 64 abgegebene Licht gelangt über den Lichtleiter 68, durch den Umlenkspiegel 38 und über das Objektiv 24 auf die Werkstückoberfläche, wird dort abgebildet. Das von der Werkstückoberfläche reflektierte Beobachtungslicht durchquert zum Teil wieder den Umlenkspiegel 38 und gelangt durch die Tubuslinse 70 und die Okularlinse 72 ins Auge eines Beobachters. Für diesen bilden das Objektiv 24, die Tubuslinse 70 und die Okularlinse 72 ein Mikroskop, durch welches Einzelheiten der Werkstückoberfläche vergrößert betrachtet werden können. Die so beobachtete Stelle der Werkstückoberfläche ist exakt diejenige, die auch unter Verwendung des Laserlichtes ausgemessen wird.

Ein Teil des von der Werkstückoberfläche reflektierten Beobachtungslichtes gelangt über den Umlenkspiegel 38 und den Meßspiegel 36 auch auf die Wandleranordnung 44. Dieses Licht könnte die Nachführung des Objektives 24 und damit das Ausmessen der Werkstückoberfläche stören, wenn die visuelle Beobachtung und das Ausmessen gleichzeitig erfolgen. Um dies zu verhindern wird der Halbleiter-Laser 34 von einer zugeordneten Speiseschaltung 74 der Betriebsschaltung 50 impulsförmig erregt, und der Eingangsverstärker 48 ist als phasenempfindlicher Gleichrichter ausgebildet, so daß nicht modulierte Lichtanteile, die ebenfalls auf die Wandleranordnung 44 fallen, die Nachregelung der Objektivstellung nicht beeinträchtigen.

Fig. 2 zeigt ein Okularstück 76, welches anstelle der Okularlinse 72 in das obere Ende des Tubus 60 eingesetzt werden kann. Das Okularstück 76 enthält in solcher axialer Lage einen Festkörper-Bildwandler 78, wie er in Fernsehkameras Verwendung findet, daß das von der Tubuslinse 70 erzeugte reelle Bild der Werkstückoberfläche auf der lichtempfindlichen Fläche des Bildwandlers 78 liegt. Der Bildwandler 78 ist über eine Kameraelektronik 80, die der handelsüblichen Elektronik tragbarer Fernsehkameras vollständig entsprechen kann, mit einem Monitor 82 verbunden. Auf diesem kann somit das Mikroskopbild des gerade ausgemessenen Bereiches der Werkstückoberfläche gleichzeitig mit dem Ausmessen der Werkstückoberfläche beobachtet werden. Diese Beobachtung ist somit bequem möglich, ohne daß die Gefahr besteht, daß der Beobachter beim Hineinblicken in das Okular den Abtastkopf 10 unbeabsichtigt berührt und so den sehr präzise vorgegebenen Weg mechanisch beeinflußt, längs dessen der Abtastkopf 10 über die Werkstückoberfläche gezogen wird. Außerdem ist auf diese Weise auch ein bequemes visuelles Kontrollieren der Werkstückoberfläche dann möglich, wenn der Abtastkopf an schlecht zugänglichen Stellen arbeitet, z. B. Zylinderlaufflächen ausmißt oder dergleichen.

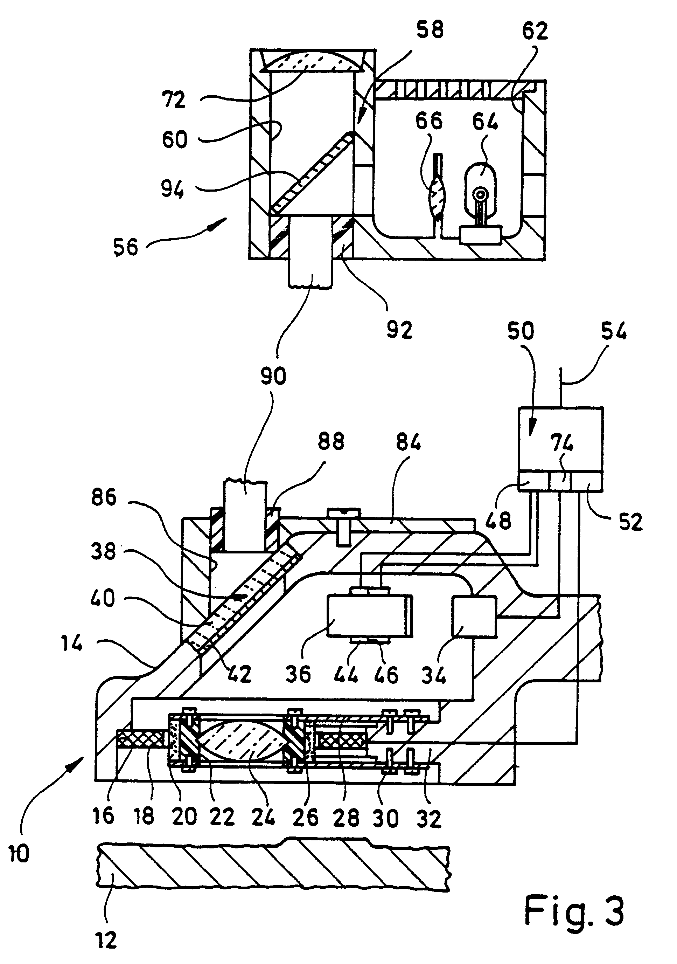

Beim Ausführungsbeispiel nach Figur 3 sind Teile, die obenstehend schon erläutert wurden, wieder mit denselben Bezugszeichen versehen; auf sie wird nachstehend nicht mehr im einzelnen eingegangen.

Das Gehäuse 58 ist vom Gehäuse 14 getrennt, und an seiner Stelle ist eine Adapterplatte 84 angeschraubt, welche einen Tubus 86 vorgibt. In letzterem ist mittels einer elastischen Klemmhülse 88 das eine Ende eines flexiblen kohärenten Faserkabels 90 festgelegt. Dieses umfaßt eine Vielzahl geordnet gebündelter Glas- oder Kunststoffasern und kann so ein Bild übertragen. Das andere Ende der Faserkabels 90 ist durch eine elastische Klemmhülse 92 im unteren Ende des Tubus 60 des Gehäuses 58 festgelegt.

In den Tubus 60 ist ferner ein für das Beobachtungslicht halbdurchlässiger Spiegel 94 eingesetzt, der das von der Halogenlampe 64 erzeugte und von der Linse 66 nun in ein Parallellstrahlenbündel umgesetzte Beobachtungslicht in das Faserkabel 90 umlenkt und das von der Werkstückoberfläche zurückgeworfene Licht zur Okularlinse 72 weiterlaufen lässt.

## Patentansprüche

1. Optischer Abtastkopf zur Ausmessung der Profilierung oder Oberflächenrauhigkeit eines Werkstückes (12) mit einer Meßlichtquelle (34),
vorzugsweise einem Festkörperlaser, mit einem Objektiv (24) zum Abbilden der Meßlichtquelle auf eine Werkstückoberfläche, dessen Achse zur Lichtquellenachse geneigt verläuft, diese vorzugsweise unter rechtem Winkel schneidet, mit einem für das Meßlicht undurchlässigen Umlenkspiegel (38), der in eine Öffnung eines Gehäuses (14) des Abtastkopfes eingesetzt ist und beim Schnittpunkt von Objektivachse und Lichtquellenachse angeordnet ist, mit einem für das Meßlicht halbdurchlässigen Meßspiegel (36), der zwischen der Meßlichtquelle und dem Umlenkspiegel angeordnet ist, mit einer photoelektrischen Wandleranordnung (44), die mit dem vom Meßspiegel abgelenkten von der Werkstückoberfläche zurücklaufenden Meßlicht beaufschlagt ist und ein vom Auftreffpunkt dieses Meßlichtes abhängiges Ausgangssignal erzeugt, mit einer Stelleinrichtung zum axialen Bewegen des Objektives, mit einer Steuerschaltung (50), durch welche die Stelleinrichtung in Abhängigkeit vom Ausgangssignal der Wandleranordnung derart betätigt wird, daß das Ausgangssignal der Wandleranordnung einen vorgegebenen Wert annimmt und mit Mittel, zum Erzeugen eines der Objektivstellen entsprechenden Meßsignales, wobei das Gehäuse (14) die Meßlichtquelle (34), den Meßspiegel (36) und die Wandleranordnung (44) enthält, dadurch gekennzeichnet, daß der Umlenkspiegel (38) für mindestens eine nicht im Meßlichtspektrum enthaltene Lichtwellenlänge durchlässig ist und auch auf seiner Rückseite optische Qualität aufweist und daß eine Beobachtungsoptik (70, 72) hinter dem Umlenkspiegel (38) angeordnet ist.

2. Abtastkopf nach Anspruch 1, dadurch gekennzeichnet, daß eine Beleuchtungseinrichtung (64-78) Beobachtungslicht mit mindestens einer nicht im Meßlichtspektrum enthaltenen Wellenlänge auf der Achse des Objektives (24) bereitstellt.

3. Abtastkopf nach Anspruch 2, dadurch gekennzeichnet, daß die Beleuchtungseinrichtung eine seitlich neben der Objektivachse angeordnete Beleuchtungslichtquelle (64) sowie Mittel (68) zum Umlenken des Beobachtungslichtes auf die Objektivachse, insbesondere einen gebogenen Lichtleiter (68), aufweist.

4. Abtastkopf nach einem der Ansprüche 1 bis 3, dadurch gekennzeichnet, daß die Meßlichtquelle (34) moduliertes Meßlicht erzeugt und das Ausgangssignal der Wandleranordnung (44) durch einen phasenempfindlichen Gleichrichter (48) verarbeitet wird.

5. Abtastkopf nach einem der Ansprüche 1 bis 4, dadurch gekennzeichnet, daß die Beobachtungsoptik eine Tubuslinse (70) sowie eine Okularlinse (72) aufweist.

6. Abtastkopf nach einem der Ansprüche 1 bis 4, dadurch gekennzeichnet, daß die Beobachtungsoptik eine Tubuslinse (70) sowie einen Festkörper-Bildwandler (78) aufweist.

7. Abtastkopf nach einem der Ansprüche 1 bis 6, dadurch gekennzeichnet, daß die Beobachtungsoptik (70, 72, 78) und gegebenenfalls die Beleuchtungseinrichtung (64-78) in einem an das Gehäuse (14) des Abtastkopfes angebauten Zusatzgehäuse (58) untergebracht sind.

8. Abtastkopf nach einem der Ansprüche 1 bis 7, dadurch gekennzeichnet, daß die Beobachtungsoptik ein kohärentes Faserkabel (90) aufweist.

9. Abtastkopf nach Anspruch 8, gekennzeichnet durch Mittel (94) zum Einführen von Beobachtungslicht (64) in das Faserkabel (90).

## Claims

1. Optical scanning head for measuring the profile or the surface roughness of a work piece (12) with a measurement light source (34), preferably a solid state laser, with an objective (24) for focussing the measurement light source on a work-piece surface, whereof the axis is inclined with respect to the light source axis, intersecting the latter preferably at right angles, with a deviating mirror (38) which is opaque to the measurement light, which is arranged in an opening of a housing (14) of the scanning head and is disposed at the intersection of the objective axis and light source axis, with a measuring mirror (36) which is semi-transparent to the measurement light, which is located between the measurement light source and the deviating mirror, with a photoelectric transducer arrangement (44), which receives the measurement light deflected by the measuring mirror and returning from the work-piece surface and produces an output signal dependent on the point of incidence of this measurement light, with a regulating device for axially moving-the objective, with a control circuit (50) by which the regulating device is actuated depending on the output signal of the transducer arrangement so that the output signal of the transducer arrangement adopts a given value and with means for producing a measuring signal corresponding to the objective position, the housing (14) containing the measurement light source (34), the measuring mirror (36) and the transducer arrangement (44), characterised in that the deviating mirror (38) is transparent to at least one. light wavelength contained in the measurement light spectrum and also has an optical quality on its rear side and that observation optics (70, 72) are located behind the deviating mirror (38).

2. Scanning head according to Claim 1, characterised in that an illumination device (64-78) makes available observation light with at least one wavelength not contained in the measurement light spectrum, on the axis of the objective (24).

3. Scanning bead according to Claim 2, characterised in that the illumination device comprises an illuminating light source (64) disposed laterally beside the objective axis as well as means (68) for deflecting the observation light onto the objective axis, in particular a curved light guide (68).

4. Scanning head according to one of Claims 1 to 3, characterised in that the measurement light source (34) produces modulated measurement light and the output signal of the transducer arrangement (44) is processed by a phase-sensitive rectifier (48).

5. Scanning head according to one of Claims 1 to 4, characterised in that the observation optics comprise a tube lens (70) as well as an ocular lens (72).

6. Scanning head according to one of Claims 1 to 6, characterised in that the observation optics comprise a tube lens (70) as well as a solid state image converter (78).

7. Scanning head according to one of Claims 1 to 6, characterised in that the observation optics (70, 72, 78) and possibly the illumination device (64-78) are located in an additional housing (58) attached to the housing (14) of the scanning head.

8. Scanning head according to one of Claims 1 to 7, characterised in that the observation optics comprises a coherent fibre cable (90).

9. Scanning head according to Claim 8, characterised by means (94) for introducing observation light (64) into the fibre cable (90).

## Revendications

1. Tête de balayage optique pour mesurer le profil ou la rugosité d'une pièce (12) avec une source de lumière de mesure (34) qui est, de préférence, un laser à corps solide, avec un objectif (24) pour projeter la source de lumière de mesure sur la surface d'une pièce dont l'axe est incliné par rapport à l'axe de la source de lumière et qui recoupe de préférence celui-ci suivant un angle droit, avec un miroir de renvoi (38) opaque à la lumière de mesure qui est arrangé dans une ouverture d'un boîtier (14) de la tête de balayage et est disposé au point d'intersection de l'axe de l'objectif et de l'axe de la source de lumière, avec un miroir de mesure (36) semitransparent pour ta lumière de mesure qui est disposé entre la source de lumière de mesure et le miroir de renvoi, avec un dispositif photoélectrique à transducteur (44) qui reçoit la lumière de mesure renvoyée par la surface de la pièce et déviée par te miroir de mesure et qui crée un signal de sortie dépendant du point d'action de cette lumière de mesure, avec un dispositif de réglage pour déplacer axialement l'objectif, avec un circuit de commande (50) permettant d'actionner le dispositif de réglage en fonction du signal de sortie du dispositif à transducteur de façon à ce que le signal de sortie du dispositif à transducteur prenne une valeur prédéterminée, et avec des moyens pour produire un signal de mesure correspondant à la position de l'objectif, le boîtier renfermant la source de lumière de mesure (34), le miroir de mesure (36) et le dispositif à transducteur (44), caractérisée en ce que le miroir de renvoi (38) est transparent pour au moins une longueur d'onde lumineuse non contenue dans le spectre de la lumière de mesure et présente également, sur sa face postérieure, des propriétés optiques, et en ce qu'une optique d'observation (70, 72) est disposée derrière le miroire de renvoi (38).

2. Tête de balayage selon la revendication 1, caractérisée en ce qu'un dispositif d'éclairage (64 78) produit une lumière d'observation avec au moins une longueur d'onde non contenue dans le spectre de la lumière de mesure sur l'axe de l'objectif (24).

3. Tête de balayage selon la revendication 2, caractérisée en ce que le dispositif d'éclairage présente une source de lumière d'éclairage (64) disposée latéralement à côté de l'axe de l'objectif ainsi qu'un moyen (68) pour dévier ta lumière d'observation sur l'axe de l'objectif et, en particulier, un guide de lumière incurvé (68).

4. Tête de balayage selon l'une des revendications 1 à 3, caractérisée en ce que la source de lumière de mesure (34) produit une lumière de mesure modulée et que le signal de sortie du dispositif à transducteur (44) est traité par un redresseur (48) à sensibilité de phase.

5. Tête de balayage selon l'une des revendications 1 à 4, caractérisée en ce que l'optique d'observation présente une lentille de tube (70) ainsi qu'une lentille d'oculaire (72).

6. Tête de balayage selon l'une des revendications 1 à 4, caractérisée en ce que l'optique d'observation présente une lentille de tube (70) ainsi qu'un convertisseur d'images à corps solide (78).

7. Tête de balayage selon l'une des revendications 1 à 6, caractérisée en ce que l'optique d'observation (70, 72, 78) et éventuellement le dispositif d'éclairage (64 - 78) sont disposés dans un boîtier supplémentaire (58) monté sur le boîtier (14) de la tête de balayage.

8. Tête de balayage selon l'une des revendications 1 à 7, caractérise en ce que l'optique d'observation présente un câble à fibres cohérentes (90).

9. Tête de balayage selon la revendication 8, caractérisée par un moyen (94) pour introduire la lumière d'observation (64) dans le câbla à fibres (90).
